# EUROPÄISCHE PATENTSCHRIFT

(11) **EP 0 846 814 B1**
(45) Veröffentlichungstag und Bekanntmachung des Hinweises auf die Patenterteilung: **11.06.2003**
(21) Anmeldenummer: 97119774.4
(22) Anmeldetag: 12.11.1997
(51) Int. Cl.: E04B 9/06, E04B 9/00, F16B 21/09

(54) **Montageschiene**
Support rail
Rail de montage

(30) Priorität: 04.12.1996 DE 19650238
(43) Veröffentlichungstag der Anmeldung: 10.06.1998
(73) Patentinhaber: Adolf Würth GmbH & Co. KG, 74653 Künzelsau (DE)
(72) Erfinder: Hoffmann, Thomas,, 74653 Künzelsau (DE)
(74) Vertreter: Patentanwälte Ruff, Wilhelm, Beier, Dauster & Partner

(56) Entgegenhaltungen:
- EP-A- 0 089 718
- EP-A- 0 233 985
- WO-A-96/17143
- DE-A- 3 036 058
- FR-A- 2 607 167
- US-A- 2 974 804
- US-A- 3 303 937
- US-A- 3 491 820
- US-A- 3 918 234

## Beschreibung

Die Erfindung geht aus von einer Montageschiene in Form eines langgestreckten Profils, das an einer Fläche angebracht werden kann.

Montageschienen dieser Art werden beispielsweise an Decken von Räumen angebracht. An den montierten Montageschienen können dann Elemente aufgehängt werden, beispielsweise Abhängungen, Deckenträger, Rohre, Leitungen oder dergleichen.

Außerdem lassen sich die Montageschienen an Wänden befestigen, d.h. an senkrechten Flächen. Hier können Regale, Ständer, Rohre usw. befestigt werden.

Üblicherweise haben Montageschienen dieser Art die Querschnittsform eines U, bei dem die freien Enden nochmals nach innen abgewinkelt sind, so daß die Form eines C entsteht.

Bei der Montage an Decken muß nach dem Anbringen der Dübellöcher die Schiene unbefestigt an Ort und Stelle gehalten werden, damit die Befestigungsbolzen durch die Befestigungsöffnungen des zur Anlage an der Fläche bestimmten Profilschenkels hindurchgesteckt werden können. Dies bedeutet einen erhöhten Montageaufwand, wozu häufig dann auch zwei Personen benötigt werden.

Es ist bereits ein Tragelement für Gitterstrukturen bekannt (WO 96/17143), das ein im Querschnitt etwa trapezförmiges Profil mit flanschartigen in einer Ebene liegenden Rändern enthält. Zur Befestigung der Struktur an einer Decke dient ein Abstandshalter.

Weiterhin bekannt ist eine Klammer (US 3 491 820), die auf eine in eine Tragstruktur eingeschraubte speziell geformte Schraube aufgeschoben werden kann. Die Schraube ist nach Befestigung nicht mehr zugängig.

Bei einer weiteren Anordnung für eine abgehängte Decke sind Klammern vorhanden, deren einer Schenkel zur Befestigung an einer Decke gedacht ist. Diese Klammer kann auf eine schon eingesetzte Schraube seitlich aufgeschoben werden, sofern der Kopf der Schraube einen deutlichen Abstand von der Decke aufweist. Ein Festziehen der Schraube von unten her ist nicht mehr möglich.

Der Erfindung liegt die Aufgabe zugrunde, eine Montageschiene zu schaffen, die sich auch an schwierigen Stellen leichter montieren läßt.

Zur Lösung dieser Aufgabe schlägt die Erfindung eine Montageschiene mit den im Anspruch 1 genannten Merkmalen vor. Weiterbildungen der Erfindung sind Gegenstand von Unteransprüchen.

Durch die seitlich angebrachten Ausnehmungen wird es möglich, die Befestigungselemente zunächst an der Wand oder der Decke anzubringen, d.h. beispielsweise die Schrauben in die Dübel so weit einzuschrauben, bis diese halten. Dann läßt sich die Montageschiene seitlich aufschieben und wird dann von den Befestigungselementen gehalten. Dieses seitliche Aufschieben kann von einer Person auch allein durchgeführt werden. Die endgültige Befestigung kann dann in der üblichen Weise geschehen, wobei dann die Montageschiene nicht mehr gehalten werden muß.

Insbesondere kann vorgesehen sein, daß die Ausnehmungen etwa T-förmig sind, wobei der Quersteg des T parallel zu der Anlagefläche des Befestigungsschenkels verläuft. Der Quersteg entspricht dabei in etwa der Seitenansicht von üblichen Schraubenköpfen oder auch Muttern.

Es ist möglich, die Montageschiene so auszubilden, dass sie erst nach Anbringung aller Befestigungselemente seitlich aufgeschoben wird. In diesem Fall würde jedes Befestigungsloch in dem Befestigungsschenkel mit einer entsprechenden Ausnehmung in dem seitlichen Schenkel verbunden sein.

Es reicht aber häufig aus, eine Montageschiene nur an wenigen Stellen anzubringen, und erst anschließend die restlichen Befestigungsbolzen durch die Öffnungen der Schiene hindurchzusetzen. Daher schlägt die Erfindung vor, dass je nach Anwendungsfall die Zahl der seitlichen Aussparungen kleiner sein kann als die Zahl der Befestigungsöffnungen.

Erfindungsgemäß kann vorgesehen sein, dass der Abstand zwischen der Aussparung und der Anlagefläche der Wandstärke des Profils entspricht.

In nochmaliger Weiterbildung der Erfindung kann vorgesehen sein, dass die mit einer Aussparung verbundene Befestigungsöffnung eine langgestreckte Form aufweist, wobei die Längsrichtung dieser Öffnung der Längsrichtung der Montageschiene entspricht. Diese Langlöcher, die bei Montageschienen bekannt sind und eine Ausrichtung der Montageschiene noch ermöglichen, haben in Verbindung mit den Maßnahmen der Erfindung den Vorteil, dass man nach dem provisorischen Anbringen der Montageschiene durch seitliches Einschieben die Montageschiene noch etwas in Längsrichtung verschieben kann, um sie dadurch gegen ein unbeabsichtigtes seitliches Herausschieben zu sichern.

Erfindungsgemäß kann vorgesehen sein, dass das Profil der Montageschiene ein Winkelprofil ist, wobei die Aussparung in dem zweiten Schenkel des Profils angeordnet ist.

Besonders günstig ist die Anordnung der Aussparung jedoch dann, wenn das Profil der Montageschiene ein U- bzw. C-Profil ist.

Erfindungsgemäß kann vorgesehen sein, dass die Aussparungen bei einem U-Profil bzw. einem C-Profil nur in einem der beiden seitlichen Profilschenkel ausgebildet sind. Das Aufschieben kann dann aus einer Richtung erfolgen.

Bei beengten Platzverhältnissen kann es jedoch auch sinnvoll sein, dass Aussparungen in beiden seitlichen Profilschenkeln ausgebildet sind, beispielsweise dann, wenn nur von einer Seite aufgeschoben werden kann und die Montageschiene nicht umgedreht werden soll.

Weitere Merkmale, Einzelheiten und Vorzüge ergeben sich aus den Patentansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Fig. 1: einen Querschnitt durch eine Montageschiene mit einer seitlichen Ausnehmung;
- Fig. 2: eine Seitenansicht eines Teils der Montageschiene von rechts in Fig. 1;
- Fig. 3: eine Teilaufsicht auf die Montageschiene von oben in Fig. 1 und 2;
- Fig. 4: eine perspektivische Ansicht einer Montageschiene mit einer seitlichen Ausnehmung.

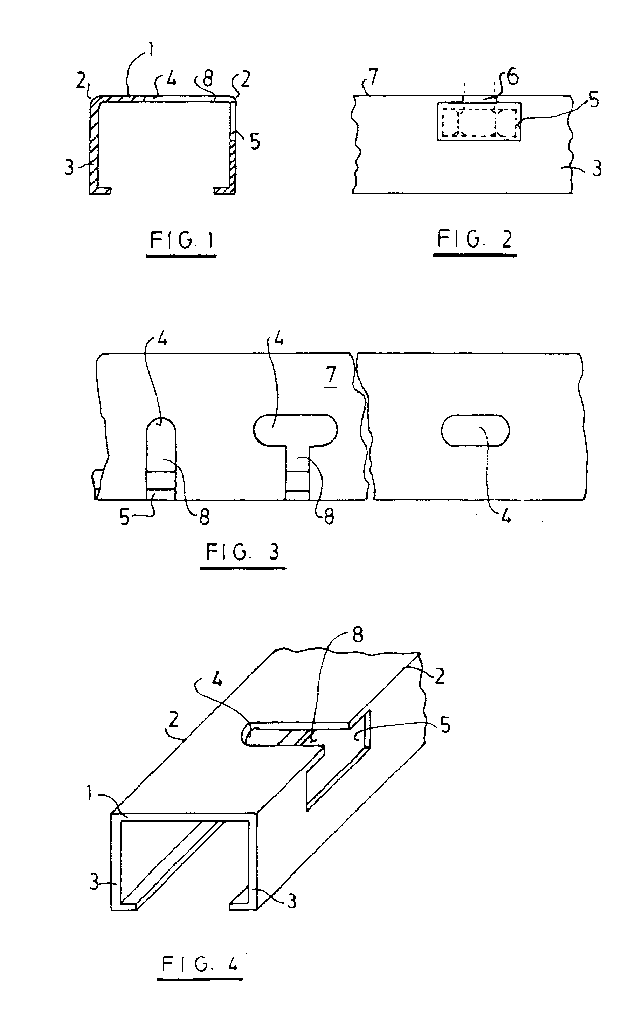

Fig. 1 zeigt im Querschnitt das Profil einer Montageschiene. Es weist die Form etwa eines U auf, zusammengesetzt aus einem zur Anlage an der Befestigungsfläche bestimmten Befestigungsprofilschenkel 1, der in Fig. 1 oben dargestellt ist. Längs der beiden Längskanten 2 dieses Profilschenkels 1 sind mit diesem die beiden seitlichen Profilschenkel 3 verbunden, die von der Ebene des Befestigungsschenkels 1 nach vorne bzw. unten abragen, im dargestellten Beispiel unter einem Winkel von 90°. Die freien Enden der seitlichen Schenkel 3 sind dann nochmals nach innen abgebogen, so dass sie dort eine Art Flansch bilden. Diese Profilform wird häufig als C-Profil bezeichnet. Es ist auch möglich, dass die freien Enden der Schenkel dann nochmals nach innen abgebogen werden, so dass sie in ihrem Endbereich ebenfalls U-förmig sind.

Der in Fig. 1 obere Profilschenkel 1 ist dazu bestimmt, mit Hilfe von Schrauben, Befestigungsbolzen oder ähnlichen Einrichtungen an einer Wand, einer Decke, oder auch an einer sonstigen Fläche befestigt zu werden. Zu diesem Zweck enthält der Befestigungsschenkel 1 eine Vielzahl von Befestigungsöffnungen 4, siehe Fig. 3. In der Decke wird beispielsweise ein Loch gebohrt, in das ein Dübel mit einer Befestigungsschraube eingesetzt wird.

Erfindungsgemäß weist im dargestellten Beispiel einer der beiden seitlichen Profilschenkel, nämlich in Fig. 1 der rechte, eine Aussparung 5 auf, die mit einem Befestigungsloch 4 in dem Befestigungsschenkel 1 verbunden ist.

Fig. 2 zeigt die Form dieser Aussparung 5 in größerer Einzelheit. Die Aussparung 5 weist die Form eines Rechtecks auf, dessen Größe so bemessen ist, dass ein Befestigungsbolzen mit einer aufgeschraubten Mutter oder mit einem Sechskantkopf seitlich durch die Aussparung 5 hindurchgeschoben werden kann. Die rechteckige Aussparung ist über einen schmaleren Steg 6 mit der Befestigungsöffnung 4 verbunden. In dem Beispiel der Fig. 2 ist der Abstand zwischen dem rechteckigen Teil der Aussparung 5 und der Oberseite 7 des Befestigungsschenkels 1 gleich der Wandstärke des Profils.

Es ist ebenfalls möglich, die Aussparung 5 mit einem größeren Abstand von dieser Fläche 7 anzuordnen, in welchem Fall der Steg 6 dann etwas länger wäre.

In Fig. 2 ist gestrichelt die Position eines Befestigungsbolzens eingezeichnet, der beispielsweise in einer Decke schon eingeschraubt ist. Das Profil läßt sich also seitlich auf diesen Befestigungsbolzen aufschieben. Dieser kann dann in der aufgeschobenen Position endgültig festgezogen werden, wozu ein Monteur mit seinem Werkzeug von dem Längsschlitz zwischen den beiden Profilschenkeln 3 Zugriff nehmen kann.

Fig. 3 zeigt eine Aufsicht auf die Oberseite 7 des Befestigungsschenkels 1. In Fig. 3 sind schematisch mehrere Möglichkeiten für die Formen von Befestigungsöffnungen 4 dargestellt.

Links in Fig. 3 ist die Befestigungsöffnung als Kreis gedacht, dessen Durchmesser der Breite des Verbindungsschlitzes 8 zu der Aussparung 5 entspricht.

Die mittlere Befestigungsöffnung 4 weist die Form eines Langlochs auf, bei dem der Verbindungsschlitz 8 etwa mittig angeordnet ist. Der Vorteil einer solchen Befestigungsöffnung besteht darin, dass man nach dem seitlichen Aufschieben der Montageschiene diese in Längsrichtung verschieben kann, so dass der Schaft des Befestigungsbolzens dann an einem Ende der Öffnung 4 liegt. Damit ist ein unbeabsichtigtes Herausschieben der noch nicht endgültig befestigten Montageschiene verhindert.

Rechts in Fig. 3 ist eine Befestigungsöffnung 4 dargestellt, die keine Verbindung mit einer Aussparung aufweist. Erfindungsgemäß reicht es aus, dass nur einige Aussparungen vorhanden sind.

Fig. 4 zeigt perspektivisch die Anordnung einer Aussparung 5, in Form eines Rechtecks wie in Fig. 2, das über einen Verbindungsschlitz 8 mit der Befestigungsöffnung 4 verbunden ist. Dies entspricht der linken Befestigungsöffnung 4 in Fig. 3.

Eine Montageschiene nach der Erfindung wird so verwendet, dass beispielsweise zwei Befestigungsschrauben oder -bolzen in die Dübel in der Wand eingebracht werden und anschließend die Montageschiene seitlich auf diese Bolzen aufgeschoben werden, deren Köpfe durch die Aussparungen 5 hindurchgehen.

Dadurch ist die Montageschiene vorläufig befestigt. Die restlichen Befestigungsschrauben können dann angebracht werden, ohne dass die Montageschiene in sonstiger Weise fixiert zu werden braucht.

## Patentansprüche

1. Montageschiene, in Form eines langgestreckten Profils, zur Anbringung an einer Fläche, mit
1.1 einem zur Anlage und Befestigung an der Fläche bestimmten Profilschenkel (1),
1.2 einer Vielzahl von in diesem Profilschenkel (1) angeordneten Befestigungsöffnungen (4),
1.3 mindestens einem von dem der Fläche zugeordneten Befestigungsschenkel (1) abragenden seitlichen Profilschenkel (3), der
1.3.1 seitliche Ausnehmungen (5) aufweist, **dadurch gekennzeichnet, daß** diese seitlichen Ausnehmungen
1.3.2 zum seitlichen Durchschieben eines mit einem Bolzenkopf, einer Mutter oder dergleichen versehenen Befestigungsbolzens ausgebildet und
1.3.3 mit je einer Befestigungsöffnung (4) verbunden sind, wobei
1.4 der Befestigungsbolzen durch die Befestigungsöffnung hindurch zur Befestigung der Montageschiene dient.

2. Montageschiene nach Anspruch 1, bei der die Ausnehmungen (5) etwa T-förmig sind, wobei der Quersteg des T parallel zu der Anlagefläche (7) des Befestigungsschenkels (1) verläuft.

3. Montageschiene nach Anspruch 1 oder 2, bei der die Zahl der Aussparungen (5) kleiner als die Zahl der Befestigungsöffnungen (4) ist.

4. Montageschiene nach einem der vorhergehenden Ansprüche, bei der der Abstand zwischen der Aussparung (5) und der Anlagefläche (7) der Wandstärke des Profils entspricht.

5. Montageschiene nach einem der vorhergehenden Ansprüche, bei der die mit einer Aussparung (5) verbundene Befestigungsöffnung (4) in Längsrichtung der Montageschiene langgestreckte Form aufweist.

6. Montageschiene nach einem der vorhergehenden Ansprüche, bei der das Profil der Montageschiene ein Winkelprofil ist.

7. Montageschiene nach einem der Ansprüche 1 bis 5, bei der das Profil der Montageschiene ein U- bzw. C-Profil ist.

8. Montageschiene nach Anspruch 7, bei der die Aussparungen (5) nur in einem der beiden seitlichen Profilschenkel (3) ausgebildet sind.

## Claims

1. A mounting rail, in the shape of an elongated profile, for mounting to a surface, with
1.1 one profile side (1) designed for arranging and fastening to the surface,
1.2 numerous fastening openings (4) arranged in the profile side (1),
1.3 at least one lateral profile side (3) that protrudes from the fastening side (1) arranged to the surface that
1.3 1 provides side notches (5), **characterized in that** those side notches
1.3.2 are designed for laterally sliding through a fastening bolt equipped with a bolt head, screw nut or the like and
1.3.3 each coupled with a fastening opening (4), wherein
1.4 the fastening bolt is used for attaching the mounting rail through the fastening opening.

2. A mounting rail according to claim 1 in which the notches (5) are more or less T-shaped, wherein the crossbar of the T runs parallel to the contact surface (7) of the fastening side (1).

3. A mounting rail according to claims 1 or 2 in which the number of notches (5) is less than the number of fastening openings (4).

4. A mounting rail according to one of the previous claims in which the distance between the notch (5) and the contact surface (7) is equivalent to the wall thickness of the profile.

5. A mounting rail according to one of the previous claims in which the fastening opening (4), which is coupled with a notch (5), has a shape that is elongated in the lengthwise direction of the mounting rail.

6. A mounting rail according to one of the previous claims in which the profile of the mounting rail is an angular profile.

7. A mounting rail according to one of claims 1 through 5 in which the profile of the mounting rail is a U and/or C profile.

8. A mounting rail according to claim 7 in which the notches (5) are designed in only one of both lateral profile sides (3).

## Revendications

1. Rail de montage sous la forme d'un profilé allongé, destiné à être posé sur une surface, possédant
1.1 une aile (1) destinée à être appliquée et fixée sur la surface,
1.2 une multitude d'ouvertures de fixation (4) disposées dans cette aile (1),
1.3 au moins une aile latérale (3) dépassant de l'aile de fixation (1) orientée vers la surface,
1.3.1 ladite aile présentant des creux latéraux (5), **caractérisés par le fait que**
1.3.2 leur forme permet de glisser latéralement un goujon de fixation pourvu d'une tête de boulon, d'un écrou ou d'un dispositif semblable et qu'ils
1.3.3 sont reliés chacun à une ouverture de fixation (4), et que
1.4 le goujon de fixation sert à fixer le rail de montage à travers l'ouverture de fixation.

2. Rail de montage selon la revendication 1, sur lequel les creux (5) ont une forme approximativement en T, la traverse du T étant parallèle à la surface de pose (7) de l'aile de fixation (1).

3. Rail de montage selon les revendications 1 ou 2, sur lequel le nombre des creux (5) est inférieur au nombre des ouvertures de fixation (4).

4. Rail de montage selon l'une des revendications précédentes, sur lequel la distance entre le creux (5) et la surface de pose (7) correspond à l'épaisseur du profilé.

5. Rail de montage selon l'une des revendications précédentes, sur lequel l'ouverture de fixation (4) reliée à un creux (5) présente une forme allongée dans le sens longitudinal du rail de montage.

6. Rail de montage selon l'une des revendications précédentes, sur lequel le profilé du rail de montage est une cornière.

7. Rail de montage selon l'une des revendications 1 à 5 sur lequel le profilé du rail de montage est un profilé en U ou en C.

8. Rail de montage selon la revendication 7 sur lequel les creux (5) ne sont formés que dans une seule des deux ailes latérales (3).
